# FASCICULE DE BREVET EUROPEEN

(11) **EP 0 468 828 B1**
(45) Date de publication et mention de la délivrance du brevet: **12.10.1994**
(21) Numéro de dépôt: 91401618.3
(22) Date de dépôt: 17.06.1991
(51) Int. Cl.: H01R 23/68, G06K 7/06

(54) **Connecteur électrique pour cartes à mémoire électronique**
Elektrischer Verbinder für elektronische Speicherkarten
Electrical connector for electronic memory cards

(30) Priorité: 23.07.1990 FR 9009391
(43) Date de publication de la demande: 29.01.1992
(73) Titulaire: ITT COMPOSANTS ET INSTRUMENTS, F-92220 Bagneux (FR)
(72) Inventeur: Janniere, Alain, F-75004 Paris (FR); Juret, Bernard, F-39100 Dole (FR)
(74) Mandataire: Kohn, Philippe

(56) Documents cités:
- EP-A- 0 274 684
- EP-A- 0 376 087
- DE-U- 8 907 699
- FR-A- 2 640 780

## Description

La présente invention concerne un connecteur électrique pour cartes à mémoire électronique du type comportant sur une de ses faces principales une pluralité de plages de contact électrique alignées parallèlement à la direction d'introduction de la carte dans un dispositif de lecture-écriture et un bord transversal antérieur perpendiculaire à la direction d'introduction de la carte, le connecteur comportant un cadre support présentant une première et une deuxième faces planes parallèles et une pluralité de conducteurs électriques en forme de lames déformables élastiquement s'étendant parallèlement à la direction d'introduction de la carte, chaque lame de contact comprenant une portion d'extrémité incurvée faisant normalement saillie au-delà de la première face plane sur laquelle coulisse la carte pour être en contact avec l'une des plages de la carte lorsque cette dernière est en position de lecture, chaque lame de contact s'étendant parallèlement à la direction d'introduction de la carte.

Un connecteur électrique de ce type est par exemple décrit dans la demande de brevet français n° 88 13988 du 26 octobre 1988.

Lors de l'introduction de la carte dans le connecteur, les portions d'extrémité incurvées des lames de contact coopèrent d'abord avec le bord antérieur de la carte qui en provoque la déflection élastique depuis leur position normale en saillie au-delà de la phase de coulissement de la carte. La suite de la course d'introduction de la carte jusqu'à ce qu'elle atteigne sa position finale de lecture, se traduit par un frottement prolongé des zones convexes bombées des portions d'extrémité des lames de contact sur la face en regard de la carte.

Ces chocs et frottements répétés lors de chaque introduction et de chaque extraction d'une carte provoquent très rapidement une usure de la portion d'extrémité incurvée des lames de contact, la qualité de la connexion établie entre la carte et le dispositif de lecture-écriture s'en trouvant rapidement affectée, notamment du fait de la disparition très rapide du revêtement de dorure qui est généralement prévu sur ces portions d'extrémité.

Afin de remédier à cet inconvénient, on connaît d'après EP-A-0 376 087, un lecteur de carte à puce qui comprend des moyens de guidage et de positionnement de carte, ainsi que des éléments de contact qui assurent le raccordement électrique avec des plages conductrices de la carte à puce et par lesquels sont établis des circuits intéressant l'appareil incorporant le lecteur de carte à puce.

Il comprend en outre notamment un chariot mobile en translation par rapport à un cadre de contact, ayant une position de repos qu'il occupe en l'absence de carte dans le lecteur, sous l'influence d'un moyen de rappel, et une position d'actionnement, dans laquelle il est poussé par une carte introduite dans le lecteur, ledit chariot étant agencé pour coopérer avec les éléments de contact de manière que, lorsqu'il est en position de repos, le chariot fait que les éléments de contact soient maintenus dans une position de repos dans laquelle ils sont en dehors du trajet d'insertion d'une carte et que, lorsqu'il est en position d'actionnement, le chariot fait que les éléments de contact viennent en appui sur les emplacements de contact de la carte.

On connaît en outre d'après EP-A-0 274 684, un lecteur de carte à circuit intégré comportant un élément support de contact monté pivotant sur un élément coulissant qui est en butée sur une partie de la carte à circuit intégré devant être insérée et qui est déplacée par la carte de circuit intégré. Lorsque l'élément coulissant se déplace, l'élément support de contact se déplace aussi et il est basculé en direction de la carte à circuit intégré par des cames fixes. Ainsi, les éléments de contact de l'élément support viennent en contact avec les contacts de la carte de circuit imprimé.

L'invention vise à perfectionner encore les agencements du type décrit ci-dessus.

Elle a donc pour objet un connecteur électrique pour cartes à mémoire électronique du type comportant sur une de ses faces principales une pluralité de plages de contact électrique alignées parallèlement à la direction d'introduction de la carte dans un dispositif de lecture-écriture et un bord transversal antérieur perpendiculaire à ladite direction d'introduction, le connecteur comportant un cadre support présentant une première face plane sur laquelle coulisse la carte et une deuxième face plane parallèle à la première et une pluralité de conducteurs électriques en forme de lames déformables élastiquement s'étendant parallèlement à la direction d'introduction de la carte, chaque lame de contact comprenant une portion d'extrémité incurvée destinée à être en contact avec l'une des plages de la carte lorsque cette dernière est en position de lecture, chaque lame de contact s'étendant parallèlement à la direction d'introduction de la carte, ledit connecteur comportant un organe de commande de la position desdites portions d'extrémité incurvées des lames de contact qui est monté mobile par rapport au cadre entre une première position de repos dans laquelle les portions d'extrémité incurvées sont effacées en deçà de ladite première face plane et une seconde position de lecture dans laquelle les portions d'extrémité incurvées font saillie au-delà du plan de la première face, et des moyens de commande des déplacements de l'organe de commande en fonction de la position de la carte par rapport au cadre, d'après EP-A-0 376 087, caractérisé en ce que l'organe de commande est une barre de commande reliée à un levier de commande monté pivotant sur le cadre support autour d'un axe perpendiculaire à la direction d'introduction de la carte et parallèle aux faces du cadre, une came de commande étant prévue sur le levier pour coopérer avec le bord transversal de la carte lorsque celle-ci atteint la fin de sa course d'introduction dans le dispositif de lecture-écriture et pour provoquer le pivotement du levier dans le sens correspondant au déplacement de la barre de commande vers sa position de lecture.

Selon d'autres caractéristiques de l'invention :
- la barre de commande s'étend perpendiculairement à la direction des lames de contact et coopère avec les extrémités libres en forme de bec de chaque lame qui prolongent les portions d'extrémité incurvées ;
- la barre de commande est sollicitée élastiquement vers sa position normale de repos et les moyens de commande agissent à l'encontre de l'effort élastique de rappel de la barre de commande ;
- le levier de commande est un levier basculant autour d'un axe central, la barre de commande et la came de commande étant agencées chacune respectivement au voisinage de l'une des deux extrémités du levier ;
- le levier comporte deux longerons parallèles reliés entre eux par la barre de commande et qui s'étendent de part et d'autre d'un groupe de lames de contact parallèles ;
- l'axe central d'articulation comporte deux pivots qui s'étendent latéralement vers l'extérieur depuis le longeron et qui sont reçus respectivement dans deux logements correspondants du cadre formant paliers d'articulation ;
- les moyens de rappel élastique comportent au moins un ressort de compression reçu dans un logement du cadre et qui agit sur l'extrémité libre du levier au voisinage de laquelle est agencée la came de commande ;
- le levier agit sur un commutateur électrique de détection de la fin de la course d'introduction de la carte au moyen d'une patte transversale dont une face coopère avec un élément de déclenchement du commutateur électrique qui est disposée sensiblement à l'extrémité du levier au voisinage de laquelle est agencée la came de commande.

D'autres caractéristiques et avantages de l'invention apparaîtront à la lecture de la description détaillée qui va suivre pour la compréhension de laquelle on se reportera aux dessins annexés dans lesquels:
- La figure 1 est une vue de dessus d'un connecteur électrique réalisé conformément aux enseignements de l'invention et qui est représenté sans son couvercle ;
- la figure 2 est une vue en section selon la ligne 2-2 de la figure 1, le connecteur étant représenté avec une carte introduite en position de lecture ;
- la figure 3 est une vue partielle similaire à celle de la figure 2 représentant le connecteur sans carte ; et
- la figure 4 est une vue de détail en section selon la ligne 4-4 de la figure 1.

La conception générale du connecteur électrique dont les principaux composants sont représentés sur les figures correspond à celle de celui décrit et représenté dans la demande de brevet français n° 88 13988 au contenu de laquelle on pourra se reporter pour une description détaillée de sa conception, de sa structure et de son procédé de réalisation.

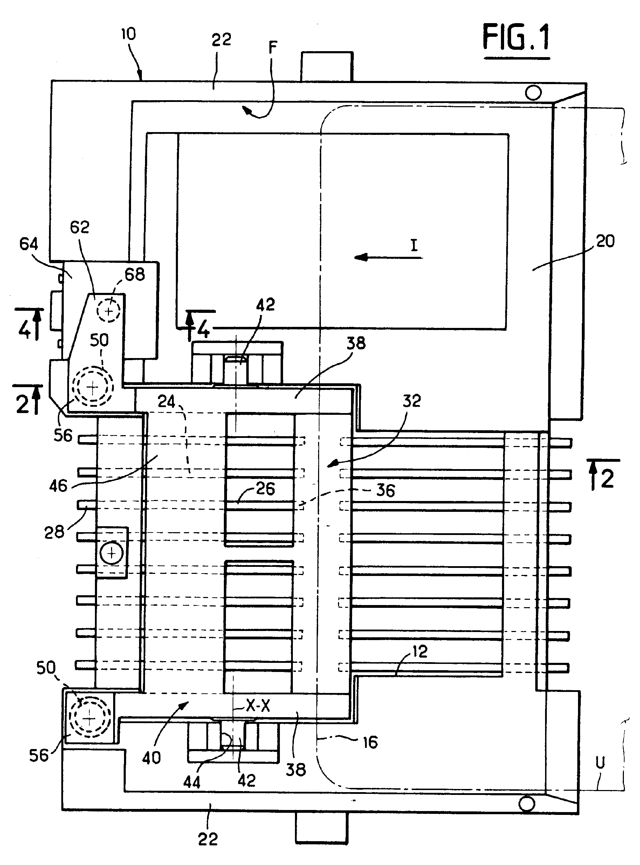

Le connecteur électrique comprend un cadre support 10 de forme générale rectangulaire qui comprend une ouverture sensiblement rectangulaire 12 dans laquelle sont agencés des conducteurs électriques en forme de lames élastiques déformables 14 qui s'étendent parallèlement à la direction d'introduction I d'une carte à mémoire électronique C dont on a représenté la silhouette en traits mixtes à la figure 1.

Une fente F d'introduction de la carte C est délimitée partiellement dans la face supérieure 20 du cadre support 10.

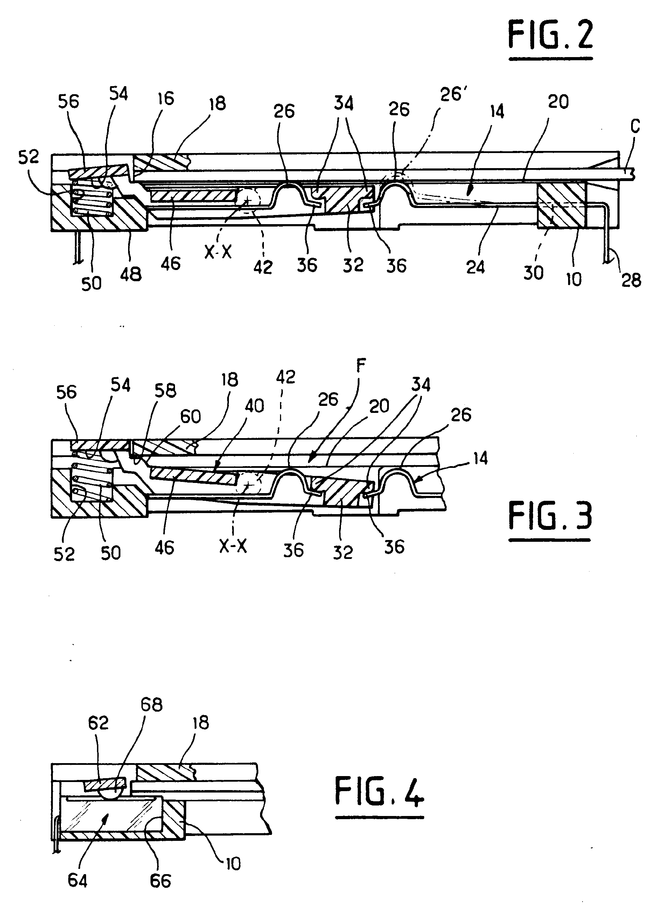

La fente F est délimitée latéralement par deux portions de guidage 22 et est complétée par un couvercle de fermeture 18 représenté aux figures 2 à 4.

Chaque lame de contact 14 comporte une partie principale 24 qui relie une première portion d'extrémité incurvée 26 à une seconde extrémité libre 28 qui permet le raccordement électrique à un circuit de traitement (non représenté).

La seconde extrémité libre 28 est reliée à la partie principale 24 par une portion de liaison 30 sur laquelle est surmoulé le matériau plastique constitutif du cadre support 10 lors de la réalisation du connecteur.

En l'absence de cartes et s'il n'était pas prévu une barre de commande selon les enseignements de l'invention, l'extrémité incurvée 26 de chaque lame 14 occuperait la position 26′ représentée en pointillés à la figure 2 dans laquelle elle fait saillie verticalement au-delà de la face supérieure plane 20 du cadre support 10.

Les lames élastiques 14 sont conçues de façon à pouvoir exercer un effort élastique de contact, selon une direction sensiblement perpendiculaire au plan de la face 20, qui soit particulièrement élevé et pouvant atteindre par exemple 0,5 Newton par point de contact sur la carte à mémoire C lorsque cette dernière est dans sa position de lecture.

Conformément à l'invention, le connecteur comporte une barre 32 de commande de la position des portions d'extrémité incurvées de contact 26 des lames 14.

La barre 32 est une barre transversale de section en forme de T (voir figures 2 et 3) qui s'étend selon une direction perpendiculaire à la direction d'introduction I de la carte.

Chacune des branches opposées 34 de la barre en forme de T est susceptible de coopérer par sa face inférieure avec une extrémité en forme de bec 36 qui prolonge la portion d'extrémité incurvée 26 de chaque lame de contact 14 selon une direction sensiblement confondue avec celle des portions principales 24.

La barre de commande 32 relie entre eux deux longerons longitudinaux parallèles 38 de manière à constituer un levier de commande 40 des déplacements de la barre de commande 32.

Chacun des longerons 38 comporte un pivot 42 qui s'étend latéralement vers l'extérieur et qui est reçu dans un logement correspondant 44 du cadre support 10 dans lequel il est emboîté élastiquement et qui forme un palier d'articulation pour définir l'axe de basculement X-X du levier de commande 40.

Conformément aux normes en vigueur au moment de l'invention, le nombre total de contacts sur la carte est inférieur ou égal à seize et le cadre représenté à la figure 1 correspond à ce nombre maximal de 16.

Les deux longerons 38 s'étendent de part et d'autre d'un groupe de lames de contact 14 depuis la barre de commande 32 jusqu'à une traverse complémentaire opposée 46 qui complète la structure du levier.

Le levier 40 est conçu de manière à être situé en totalité dans l'épaisseur du cadre support 10 délimité par sa face supérieure 20 et sa face inférieure plane opposée 48.

Le levier 40 occupe normalement sa position de repos représentée aux figures 1 et 3 vers laquelle il est sollicité élastiquement par deux ressorts hélicoïdaux de rappel 50 qui sont reçus dans des logements complémentaires 52 du cadre support 10 et qui coopèrent avec les faces en vis-à-vis 54 de deux pattes latérales d'extrémité 56 qui s'étendent latéralement depuis les longerons 38 dans la zone d'extrémité de la traverse 46.

Comme on peut le voir à la figure 3, l'action des ressorts 50 a pour effet de provoquer la rotation dans le sens horaire, en considérant cette figure, du levier 40 autour de son axe X-X. Cette position normale de repos est définie par une face de butée 58 formée sur le levier 40 qui coopère avec la face inférieure du couvercle 18.

Dans cette position de repos, la barre de commande 32 occupe une position basse dans laquelle les branches 34 sont en appui contre les becs 36 des lames 14 de manière à provoquer l'effacement des portions d'extrémité incurvées 26 en deçà de la face supérieure plane 20 du cadre support 10 sur laquelle vient coulisser une carte C lorsqu'elle est introduite dans le connecteur électrique.

Sur la face supérieure de la traverse 46 au voisinage de l'extrémité libre de gauche du levier 40 en considérant les figures, il est prévu une surface en saillie 60 formant came de commande des déplacements en pivotement du levier 40 autour de son axe X-X et donc de la barre de commande 32.

La surface de came 60 est inclinée et est prévue pour coopérer avec le bord transversal antérieur 16 de la carte lorsque celle-ci est introduite dans la fente F.

Comme on peut le constater à la figure 1, la patte latérale 56 du levier de commande 40 se prolonge latéralement au-delà de la zone du ressort 50 pour constituer une patte de commande 62 du déclenchement d'un commutateur électrique 64 de détection de la fin de course d'introduction de la carte C.

Le commutateur 64 peut être de tout type connu et notamment un "micro-switch" étanche de forme parallépipédique rectangle agencé à plat dans un logement complémentaire 66 formé dans le cadre support 10.

La commande de l'organe de déclenchement (non représenté) du commutateur 64 est assurée par la patte de commande 62 sur la face inférieure de laquelle peut être prévu un plot 68 formant poussoir de déclenchement.

On décrira maintenant le mode de fonctionnement du connecteur électrique en se reportant notamment aux figures 2 et 3.

Lorsque le connecteur électrique est vide, l'ensemble de ses composants occupe la position représentée à la figure 3 sur laquelle on constate qu'il est possible d'introduire une carte dans la fente F sans que son bord antérieur 16 ni sa face inférieure de coulissement qui coopère avec la face supérieure 20 du cadre support 10 ne viennent rencontrer ni frotter sur les portions d'extrémité incurvées 26 des lames de contact 14. En effet ces portions 26 sont maintenues en position effacée en-deçà de la face 20 par la barre de commande 32 comme cela est illustré à la figure 3.

Lorsque l'on introduit une carte C et que celle-ci arrive à proximité de sa fin de course d'introduction, son bord transversal antérieur 16 vient en contact avec la surface de came de commande 60 de manière à provoquer le basculement du levier de commande 40 autour de son axe X-X dans le sens anti-horaire en considérant la figure 3, à l'encontre de l'effort élastique de rappel qui lui est appliqué par les ressorts 50.

Ce mouvement de basculement a pour effet de provoquer le déplacement de la barre de commande 32 selon une direction sensiblement verticale jusqu'à ce qu'elle vienne occuper sa position haute de lecture représentée à la figure 2 dans laquelle ses branches 34 ne coopèrent plus avec les becs 36 des lames 14.

Au cours de ce pivotement, les lames 14 remontent également en direction de la carte C sous l'effet de leur élasticité propre de manière que leurs portions d'extrémité incurvées 26 viennent en contact avec la face inférieure correspondante de la carte 16.

En position de lecture telle que représentée à la figure 2. l'extrémité antérieure de la carte 16 est en appui sur la surface de butée 58, les ressorts 50 ayant pour effet d'assurer un léger pincement de la carte entre la surface 58 et la face inférieure du couvercle 18 pour en assurer un bon maintien en position axiale.

Les portions de contact incurvées 26 ne viennent donc "atterrir" sur les plages de contact de la carte pratiquement que lorsque cette dernière est en position de lecture, la longueur de la course de frottement étant ainsi particulièrement courte, de l'ordre d'environ 1 mm, cette course réduite favorisant par ailleurs un "auto-nettoyage" des contacts.

La géométrie de la rampe en forme de came 60 qui commande le basculement du levier 40 est conçue de manière à ce que l'effort d'insertion de la carte dans le connecteur soit sensiblement constant entre le début de la phase d'attaque de la came 60 par le bord antérieur de la carte et la fin de l'insertion de la carte limitée par une butée mécanique aménagée soit sur le cadre support 10, soit en extrémité de longeron 38.

Grâce à cette conception, il est possible de disposer le commutateur de fin de course 64 en position horizontale et de limiter ainsi l'épaisseur du connecteur tout en rendant le changement d'état du commutateur 64 conforme aux normes de sécurité d'utilisation des cartes à micro-circuit.

A titre de variante non représentée, il est possible d'incorporer au levier 40 un insert métallique surmoulé en forme de plaque dont des portions pourraient constituer les pattes 56 et 62. De même les ressorts 50 pourraient être remplacés par des languettes élastiques faisant partie de l'insert de renfort.

## Revendications

1. Connecteur électrique pour cartes (C) à mémoire électronique du type comportant sur une de ses faces principales une pluralité de plages de contact électrique alignées parallèlement à la direction (I) d'introduction de la carte dans un dispositif de lecture-écriture et un bord transversal antérieur (16) perpendiculaire à ladite direction d'introduction, le connecteur comportant un cadre support (10) présentant une première face plane (20) sur laquelle coulisse la carte et une deuxième face plane (48) parallèle à la première et une pluralité de conducteurs électriques en forme de lames déformables élastiquement (14) s'étendant parallèlement à la direction d'introduction de la carte, chaque lame de contact comprenant une portion d'extrémité incurvée (26) destinée à être en contact avec l'une des plages de la carte lorsque cette dernière est en position de lecture, chaque lame de contact (14) s'étendant parallèlement à la direction d'introduction de la carte, ledit connecteur comportant un organe (32) de commande de la position desdites portions d'extrémité incurvées (26) des lames de contact (14) qui est monté mobile par rapport au cadre (10) entre une première position de repos dans laquelle les portions d'extrémité incurvées (26) sont effacées en deçà de ladite première face plane (20) et une seconde position de lecture dans laquelle les portions d'extrémité incurvées (26) font saillie au-delà du plan de la première face, et des moyens de commande (40) des déplacements de l'organe de commande (32) en fonction de la position de la carte (C) par rapport au cadre (10), caractérisé en ce que l'organe de commande est une barre de commande reliée à un levier de commande (40) monté pivotant sur le cadre support (10) autour d'un axe (X-X) perpendiculaire à la direction d'introduction de la carte et parallèle aux faces du cadre, une came de commande (60) étant prévue sur le levier pour coopérer avec le bord transversal de la carte lorsque celle-ci atteint la fin de sa course d'introduction dans le dispositif de lecture-écriture et pour provoquer le pivotement du levier (40) dans le sens correspondant au déplacement de la barre de commande (32) vers sa position de lecture.

2. Connecteur selon la revendication 1, caractérisé en ce que la barre (32) s'étend perpendiculairement à la direction des lames de contact (14) et coopère avec les extrémités libres en forme de bec (36) de chaque lame (14) qui prolongent lesdites portions d'extrémité incurvées (26).

3. Connecteur selon l'une des revendications 1 ou 2, caractérisé en ce que la barre (32) est sollicitée élastiquement vers sa position normale de repos et en ce que lesdits moyens de commande (40) agissent à l'encontre de l'effort élastique de rappel de la barre de commande (32).

4. Connecteur selon la revendication 1, caractérisé en ce que le levier de commande (40) est un levier basculant autour d'un axe central (X-X), la barre de commande (32) et la came de commande (60) étant agencées chacune respectivement au voisinage de l'une des deux extrémités du levier.

5. Connecteur selon l'une des revendications 1 ou 4, caractérisé en ce que le levier comporte deux longerons parallèles (38) reliés entre eux par la barre de commande et qui s'étendent de part et d'autre d'un groupe de lames de contact parallèles (14).

6. Connecteur selon la revendication 5 prise en combinaison avec la revendication 4, caractérisé en ce que l'axe central d'articulation comporte deux pivots (42) qui s'étendent latéralement vers l'extérieur depuis lesdits longerons et qui sont reçus respectivement dans deux logements correspondants (44) du cadre formant paliers d'articulation.

7. Connecteur selon l'une quelconque des revendications 1 à 6, caractérisé en ce que lesdits moyens de rappel élastique comportent au moins un ressort de compression (50) reçu dans un logement du cadre et qui agit sur l'extrémité libre du levier au voisinage de laquelle est agencée la came de commande (60).

8. Connecteur selon l'une quelconque des revendications précédentes, caractérisé en ce que le levier de commande agit sur un commutateur électrique (64) de détection de la fin de la course d'introduction de la carte.

9. Connecteur selon la revendication 8, caractérisé en ce que le levier comporte une patte transversale (62) dont une face coopère avec un élément de déclenchement du commutateur électrique de fin de course (64).

10. Connecteur selon la revendication 9 prise en combinaison avec l'une quelconque des revendications 4 à 6, caractérisé en ce que ladite patte (62) est disposée sensiblement à l'extrémité du levier (40) au voisinage de laquelle est agencée la came de commande (60).

## Patentansprüche

1. Elektrischer Verbinder für elektronische Speicherkarten (C), die auf einer ihrer Hauptseiten eine Vielzahl elektrischer Kontaktflächen, die parallel zur Einführrichtung (1) der Karte in eine Lese-Schreib-Vorrichtung aneinandergereiht sind, und einen zu der Einführrichtung senkrechten, querverlaufenden Vorderrand (16) aufweisen, wobei der Verbinder einen Trägerrahmen (10) mit einer ersten ebenen Fläche (20), auf der die Karte verschiebbar ist, und einer zur ersten parallelen zweiten ebenen Fläche (48) und eine Vielzahl elektrischer Leiter in Form von elastisch verformbaren Zungen (14), die sich parallel zur Einführrichtung der Karte erstrecken, besitzt wobei jede Kontaktzunge einen gebogenen Endabschnitt (26) aufweist, der mit einer der Flächen der Karte in Kontakt bringbar ist, wenn letztere in der Leseposition ist, und jede Kontaktzunge (14) sich parallel zur Einführrichtung der Karte erstreckt, wobei der Verbinder ein Steuerorgan (32) für die Steuerung der Stellung der gebogenen Endabschnitte (26) der Kontaktzungen (14), welches in bezug auf den Trägerrahmen (10) zwischen einer ersten Ruhestellung, in der die gebogenen Endabschnitte (26) unter die erste ebene Fläche (20) zurückgezogen sind, und einer zweiten Lesestellung, in der die gebogenen Endabschnitte (26) über die Ebene der ersten Fläche überstetlen, beweglich angeordnet ist und Steuermittel (40) zur Lageveränderung des Steuerorgans (32) gegenüber dem Trägerrahmen (10) in Abhängigkeit von der Position der Karte (C) aufweist, **dadurch gekennzeichnet,** daß das Steuerorgan eine mit einem Stellhebel (40) verbundene Steuerleiste ist, welcher um eine zur Einführrichtung der Karte senkrechte Achse (X-X) und parallel zu den Seiten des Rahmens schwenkbar auf dem Trägerrahmen (10) angeordnet ist, wobei ein Steuernocken (60) auf dem Hebel vorgesehen ist, der mit dem Querrand der Karte zusammenwirkt, wenn diese das Ende ihrer Einführbewegung in die Schreib-Lese-Vorrichtung erreicht, und der die Schwenkbewegung des Hebels (40) in die Richtung auslöst, die der Lageveränderung des Steuerleiste (32) in ihre Lesestellung entspricht.

2. Verbinder nach Anspruch 1, dadurch gekennzeichnet, daß sich die Leiste (32) senkrecht zur Richtung der Kontaktfedern (14) erstreckt und mit den freien schnabelförmigen Enden (36) aller Zungen (14) zusammenwirkt, die die gebogenen Endabschnitte (26) verlängern.

3. Verbinder nach einem der Ansprüche 1 oder 2, dadurch gekennzeichnet, daß die Leiste (32) durch Federbelastung in ihrer normalen Ruhestellung gehalten ist und daß die Steuermittel (40) gegen die Rückstellfederkraft der Steuerleiste (32) wirken.

4. Verbinder nach Anspruch 1, dadurch gekennzeichnet, daß der Stellhebel (40) ein um eine mittige Achse (X-X) schwenkender Hebel ist, wobei die Steuerleiste (32) bzw. der Steuernocken (60) jeweils in der Nähe eines der beiden Enden des Hebels angeordnet ist.

5. Verbinder nach einem der Ansprüche 1 oder 4, dadurch gekennzeichnet, daß der Hebel zwei parallele Längsträger (38) aufweist, die miteinander durch die Steuerleiste verbunden sind und die sich beiderseits einer Gruppe von parallelen Kontaktzungen (14) erstrecken.

6. Verbinder nach Anspruch 5 in Kombination mit Anspruch 4, dadurch gekennzeichnet, daß die mittige Schwenkachse zwei Zapfen (42) aufweist, die sich von den Längsträgern seitwärts nach außen erstrecken und die jeweils in zwei entsprechenden, Gelenklager bildenden Aufnahmen (44) des Rahmen eingesetzt sind

7. Verbinder nach einem der Ansprüche 1 bis 6, dadurch gekennzeichnet, daß die elastischen Rückstellmittel wenigstens eine in einer Aufnahme des Rahmens eingesetzte Druskfeder (50) umfassen, die auf das freie Ende des Hebels wirkt, in dessen Nähe der Steuernocken (60 ausgebildet ist.

8. Verbinder nach einem der vorhergehenden Ansprüche, dadurch gekennzeichnet, daß der Stellhebel einen elektrischen Schalter (64) zum Erfassen des Endes der Einführbewegung der Karte betätigt.

9. Verbinder nach Anspruch 8, dadurch gekennzeichnet, daß der Hebel eine quergerichtete Zunge (62) aufweist, deren eine Fläche mit einem Betätigungselement des elektrischen Bewegungsendschalters (64) zusammenwirkt.

10. Verbinder nach Anspruch 9 in Kombination mit einem der Ansprüche 4 bis 6, dadurch gekennzeichnet, daß die Zunge (62) ungefähr an dem Ende des Hebels (40) angeordnet ist, in dessen Nähe der Steuernocken (60) ausgebildet ist.

## Claims

1. Electrical connector for electronic memory cards (C), of the type having on one of its main faces a plurality of electrical contact areas aligned parallel to the direction (I) of insertion of the card in a read-write device and a front transverse edge (16) perpendicular to the said direction of insertion, the connector having a support frame (10) with a first flat face (20) on which the card slides and a second flat face (48) parallel to the first and a plurality of electrical connectors in the form of elastically deformable blades (14) extending parallel to the direction of insertion of the card, each contact blade comprising a curved end portion (26) intended to be in contact with one of the areas on the card when the latter is in the read position, each contact blade (14) extending parallel to the direction of insertion of the card, the said connector including a device (32) for controlling the position of the said curved end portions (26) of the contact blades (14) which is mounted so as to be able to move with respect to the frame (10) between a first idle position in which the curved end portions (26) are retracted below the said first flat face (20) and a second read position in which the curved end portions (26) project beyond the plane of the first face, and means (40) for controlling the movements of the control device (32) according to the position of the card (C) with respect to the frame (10), characterised in that the control device is a control bar connected to a control lever (40) mounted so as to pivot on the support frame (10) about an axis (X-X) perpendicular to the direction of insertion of the card and parallel to the faces of the frame, a control cam (60) being provided on the lever in order to cooperate with the transverse edge of the card when the latter reaches the end of its insertion travel in the read-write device and to cause the lever (40) to pivot in the direction corresponding to the movement of the control bar (32) to its read position.

2. Connector according to Claim 1, characterised in that the bar (32) extends perpendicularly to the direction of the contact blades (14) and cooperates with the free ends, in the form of a tip (36), of each blade (14) which extend the said curved end portions (26).

3. Connector according to one of Claims 1 or 2, characterised in that the bar (32) is pushed elastically towards its normal idle position and in that the said control means (40) act against the elastic restoring force of the control bar (32).

4. Connector according to Claim 1, characterised in that the control lever (40) is a lever pivoting about a central axis (X-X), the control bar (32) and control cam (60) each being arranged respectively in the vicinity of one of the two ends of the lever.

5. Connector according to one of Claims 1 or 4, characterised in that the lever has two parallel side members (38) connected together by the control bar and which extend on each side of a group of parallel contact blades (14).

6. Connector according to Claim 5 taken in combination with Claim 4, characterised in that the central pivot axis includes two pivots (42) which extend laterally outwards from the said side members and which are received respectively in two corresponding housings (44) in the frame forming pivot bearings.

7. Connector according to any one of Claims 1 to 6, characterised in that the said elastic return means include at least one compression spring (50) received in a housing in the frame and which acts on the free end of the lever in the vicinity of which the control cam (60) is arranged.

8. Connector according to any one of the preceding claims, characterised in that the control lever acts on an electrical switch (64) for detecting the end of insertion travel of the card.

9. Connector according to Claim 8, characterised in that the lever has a transverse lug (62), one face of which cooperates with a component for triggering the electrical end of travel switch (64).

10. Connector according to Claim 9 taken in combination with any one of Claims 4 to 6, characterised in that the said lug (62) is disposed substantially at the end of the lever (40) in the vicinity of which the control cam (60) is arranged.
